# EUROPEAN PATENT APPLICATION

(11) **EP 1 336 342 A1**
(43) Date of publication of application: **20.08.2003**
(21) Application number: 00970221.8
(22) Date of filing: 30.10.2000
(51) Int. Cl.: A23L 1/48, A21D 13/00

(54) **PROCESS FOR PRODUCING BALL-SHAPE FOOD**

(71) Applicant: Kin, Hiroaki, Kitakyushu-shi, Fukuoka 805-0023 (JP)
(72) Inventor: Kin, Hiroaki, Kitakyushu-shi, Fukuoka 805-0023 (JP)
(74) Representative: VOSSIUS & PARTNER
(86) International application number: JP0007644
(87) International publication number: WO02035946

(57) **Abstract**

A lightly seasoned fluid batter is prepared by kneading a mixture of wheat flour containing gluten, a small amount of swelling agent, additives including a first seasoning for lightly seasoning a whole shell, and water in an amount 3 to 5 times as much as the wheat flour by weight. Also, roasted meat pieces are obtained by preparing sliced livestock meat (5 to 15 g), impregnating the meat with a second seasoning having a soy sauce flavor and a strong taste, and roasting. Edible oil is applied inside of hemispheric cavities (34 to 60 mm in diameter) provided on a preheated mold, and the batter is poured on top thereof. The roasted meat pieces are put further on top thereof, and the whole of the batter disposed in the cavities of the mold is turned while heating to make spherical products. The resultant spherical products are seasoned by spraying or applying a third seasoning having a soy sauce flavor and a light taste.

## Description

### TECHNICAL FIELD

The present invention relates to a process for producing a ball-shaped food produced by wrapping roasted meat which is seasoned and then cooked in a batter made mainly from wheat flour.

### BACKGROUND ART

Conventionally, "takoyaki" has been known as a ball-shaped food. For producing takoyaki, a mold which is a griddle having a plurality of hemispheric cavities is heated to an appropriate temperature with a stove etc., a slurry-like batter prepared by adding seasonings, a swelling agent and water to wheat flour is poured into the cavities of the mold, and chunks of octopus and shredded vegetables are put on top of the batter in the cavities and the batter is turned with the use of a needle-like cooking utensil having a sharp tip to obtain an intermediate processed food having a ball shape as a whole. Subsequently, the outer surface of the ball-shaped product thus obtained is applied with sauce prepared beforehand and garnished with green laver, fish flour, red pickled ginger etc., thereby takoyaki is produced.

However, since conventional takoyaki is made mainly from wheat flour with chunks of octopus added to it and octopus itself has a light taste like a batter, it has a monotonous taste. Needless to say, each manufacturer of takoyaki has been trying to season takoyaki in a various way based on his or her ingenuity or to suit consumers' preferences. However, since octopus is used in every case, takoyaki basically has a common taste.

On the other hand, other meat products made mainly from wheat flour with the use of beef or pork (e.g., hamburgers etc.) have been showing a significant growth in demand in recent years because these products are tasty and popular among children. However, these meat products are rather big in shape, and it is not common to subdivide one meat product among a plurality of people for eating.

The present invention has been achieved in view of such a situation and aims to provide a process for producing a ball-shaped food having an unprecedented new texture using livestock meat which is nutritious and excellent in taste instead of using octopus as an ingredient by breaking a conventional notion of takoyaki.

### DISCLOSURE OF INVENTION

A process for producing ball-shaped food for attaining the above objects comprises: a first step of obtaining a lightly seasoned fluid batter by kneading a mixture of wheat flour containing gluten; a small amount of swelling agent, additives including a first seasoning for lightly seasoning a whole shell, and water in an amount 3 to 5 times as much as the wheat flour by weight; a second step of obtaining roasted meat pieces by preparing sliced livestock meat in an amount of 5 to 15 g, impregnating the meat with a second seasoning having a soy sauce flavor and a strong taste, and then roasting the meat; a third step of applying edible oil (lard, salad oil etc.) to the inside of hemispheric cavities of 34 to 60 mm in diameter provided on a preheated mold, pouring the batter obtained in the first step on top thereof, and putting the roasted meat pieces obtained in the second step further on top thereof; a fourth step of making spherical products by turning the whole of the batter disposed in the cavities of the mold while heating; and a fifth step of seasoning the resultant spherical products by spraying or applying a third seasoning having a soy sauce flavor and a light taste.

Here, as the swelling agent, baking powder mainly containing baking soda is preferably used. However, others can be used as long as it expands by heating. Since adding too much swelling agent strengthens the flavor of the swelling agent, and besides, tends to form big hollows in the product itself, the amount of the swelling agent is preferable to be in a range between about 30 and 60 g to 1 kg of wheat flour. By adding the swelling agent, the batter in the mold having hemispheric cavities swells and the ball-shaped food can be baked. Furthermore, by adding cornstarch (e.g., in an amount of about 40 to 60 g) to the batter prepared in the first step, it becomes possible to make the batter viscous and to adjust the taste.

Furthermore, in the process for producing ball-shaped food according to the present invention, it is preferable that ingredients mainly containing tenkasu (deep-fried tempura batter crumbs) and chopped green onion are evenly spread over the batter after putting the roasted meat pieces in the third step. Here, "ingredients mainly containing tenkasu (deep-fried tempura batter crumbs) and chopped green onion are evenly spread over the batter" denotes that these ingredients are spread to an extent that the batter underneath cannot be seen. The ingredients can be spread either before or after putting the roasted meat in the batter, but should be spread before gelatinization of starch in the batter. In this case, fish flour, dried laver powder, and chopped vegetables other than green onion can be added as the ordinary takoyaki wherein octopus is used as an ingredient, which helps to adjust the taste of the ball-shaped food.

Moreover, in the process for producing ball-shaped food according to the present invention, wheat flour adjusted to contain gluten in an amount of 8.5 to 16 % by weight and having a right consistency is preferably used as the wheat flour. Since a large amount of gluten makes the batter too sticky like a rice cake, gluten in excess of 16 % by weight is not preferable. Wheat flour is categorized, according to the gluten content, into strong flour (gluten content: 13 % or more), soft flour (gluten content: 8 % or less) and semi-hard flour having an intermediate gluten content. These types of wheat flour are mixed properly to prepare the wheat flour used. In this case, if the gluten content is low, consistency of the batter is weakened thus the products become easy to be deformed. However, if the deformation does not become a particular problem, it is possible to use only the soft flour having a relatively low gluten content.

The first seasoning contained in the additives used in the first step mainly contains salt, sugar, flavorings and soy sauce (koikuchi (dark) soy sauce sold on the market is preferable), and the additives further contain ground yam and eggs. Combination ratios of these to the wheat flour used as 100 % are preferably the following by the external division, i.e., the salt is in an amount of 0.2 to 1.5 % by weight, the sugar is in an amount of 0.5 to 2 % by weight, the flavorings is in an amount of 1 to 3 % by weight, the soy sauce is in an amount of 2 to 5 % by weight, the ground yam is in an amount of 10 to 20 % by weight, and the eggs are 3 to 7 pieces to 1 kg of wheat flour. Here, the term "flavorings" (also the same in the second and third seasonings) denotes so-called chemical condiments, such as monosodium glutamate, sodium inosinate, sodium guanylate, a mixture of these or the like. As the amounts of the respective ingredients of the first seasoning increase, the tastes of these ingredients become stronger. Conversely, as the amounts of the respective ingredients of the first seasoning decrease, the tastes of these ingredients become weaker. Therefore, each amount is determined by performing repeated tests targeting people having a popular taste.

The ground yam is preferably stirred well beforehand to contain air bubbles, thereby the batter is made porous and given a soft texture as a whole. Adding large amount of yam consequently decreases the proportion of wheat flour, by which the batter becomes weak and easy to tear, and moreover, the taste changes. If the amount of yam is small, effect of incorporating yam is not shown. Therefore, the amount of yam is determined in a range between 10 to 20 % by weight to the total amount of wheat flour by the external division. In addition, lecithin contained in egg emulsifies water and oil contained in the ingredients, thereby improving the taste of the batter. Accordingly, 3 to 7 eggs (middle-sized egg as reference) are added to 1 kg of wheat flour. The amount of egg was determined in this range since adding an excessive amount of egg consequently decreases the wheat flour content, by which the consistency of the shell of the product is decreased and the product becomes easy to be broken, and moreover, the taste changes.

Furthermore, as the livestock meat used in the ball-shaped food according to the present invention, beef is the most suitable for use. In this case, abdominal meat of cattle is the most suitable for use, but the present invention is not limited by this and meat of other parts can be used except meat containing mainly of fat. The second seasoning for strongly seasoning the livestock meat is preferably prepared by the following steps. Namely, a mixture mainly containing soy sauce, sugar in an amount of 50 to 80 % by weight to the soy sauce as 100 % by the external division, and flavorings in an amount of 2 to 5 % by weight to the soy sauce as 100 % by the external division is heated until the sugar mixed in the mixture completely dissolves. After the mixture cools, mirin (sweet sake) in an amount of 15 to 25 % by weight to the soy sauce as 100 %, and liquor in an amount of 15 to 25 % by weight to the soy sauce as 100 % by conversion into Japanese sake are mixed in the mixture to obtain basic sauce. Next, to 1.2 liters of the basic sauce, dried and powdered cayenne pepper in an amount of 20 to 60 g, and ground raw garlic in an amount of 50 to 100 g are added and stirred. Further, sesame oil, roasted sesame and black pepper each in a small amount are added at the time of use. The second seasoning may be strong sauce sold on the market which is generally used for roasted beef. The reason for adding cayenne pepper, raw garlic etc. after preparing the basic sauce first is to avoid their flavors from changing by boiling. Each amount is determined so that the taste will permeate into the meat sufficiently and the seasoned meat alone can be eaten as roasted beef. Although the amounts of raw garlic and cayenne pepper cannot be determined uniformly because these amounts greatly vary according to preferences, the amounts have been adjusted to produce a taste which enables a large number of people to eat. Also, if the amount of sugar is increased, the taste becomes too sweet, and if raw garlic and cayenne pepper are added in excess, their flavors are strengthened. In both cases, the tastes do not match to a taste of ordinary people. In addition, liquor incorporated is not necessarily limited to refined sake (Japanese sake), and other kinds of liquor (e.g., wine) can be used. In this case, the amount of the liquor is preferably determined by converting the alcohol units into those of refined sake.

In the process for producing ball-shaped food according to the present invention, the third seasoning is preferably prepared by the following steps. Namely, water in an amount of 3 to 4 liters, sliced ginger in an amount of 100 to 300 g, crashed garlic in an amount of 100 to 300 g, flavorings in an amount of 60 to 100 g, and sugar in an amount of 0.8 to 1.3 kg are incorporated in soy sauce in an amount of 2 liters. After mixing and heating the resultant mixture, mirin (sweet sake) in an amount of 150 to 250 cc and liquor in an amount of 150 to 250 cc (by the conversion into Japanese sake) are incorporated to produce soy-sauce-flavored seasoning. Here, conventional light-taste soy sauce etc. can be used as the third seasoning, however, specially preparing the seasoning by using soy sauce (koikuchi (dark) soy sauce in this case), diluting the soy sauce and adding ginger, garlic, flavorings, sugar, mirin, liquor etc. can give the special flavors of ginger, garlic etc. to the products. The amounts of ginger, garlic, flavorings, sugar, mirin and liquor were determined within the above-mentioned ranges because incorporating those in a large amount strengthens the flavors of the ingredients incorporated, which consequently weakens the tastes of the batter and roasted beef to be eaten, and moreover, is not suitable for the public.

Furthermore, in the present invention, either the first step or second step can be carried out first, or the steps can be carried out at the same time.

### BEST MODE FOR CARRYING OUT THE INVENTION

Next, an embodiment of the present invention will be described for the present invention to be understood.

A process for producing ball-shaped food according to an embodiment of the present invention comprises : a first step of preparing a lightly seasoned fluid batter by kneading wheat flour containing gluten, a small amount of swelling agent, additives including a first seasoning for lightly seasoning a whole shell, and water in an amount 3 to 5 times as much as the wheat flour by weight; a second step of preparing sliced livestock meat in an amount of 5 to 15 g, impregnating the meat with a second seasoning having a soy sauce flavor and a strong taste, and then roasting the meat to obtain roasted meat pieces; a third step of applying edible oil inside of hemispheric cavities of 34 to 60 mm in diameter (still preferably, 40 to 50 mm) provided on a preheated mold, pouring the batter obtained in the first step on top thereof, and putting the roasted meat pieces obtained in the second step further on top thereof; a fourth step of turning the whole of the batter disposed in the cavities of the mold while heating to make spherical products; and a fifth step of seasoning the resultant spherical products by spraying or applying a third seasoning having a soy sauce flavor and a light taste. Hereafter, these will be described concretely.

### First Step

400 g of strong flour having gluten content of 13 % or more by weight and 600 g of soft flour having gluten content of 8 % or less by weight are prepared. Thereby, 1 kg of wheat flour having gluten content in a range between 8.5 and 16 % by weight (still preferably, between 9 and 13 % by weight) is prepared. Next, 50 g of baking powder as an example of swelling agent, 10 g of salt, 10 g of sugar, 20 g of monosodium glutamate as an example of flavorings, 40 cc of specially prepared soy sauce are added to the wheat flour. Furthermore, in this mixture, 4 liters of water, 5 raw eggs (middle size) and 150 g of ground yam as additives are incorporated and kneaded entirely for about 15 to 30 minutes to make a fluid batter. For kneading the batter, a type of mixer whose internal blades or container rotates at a low speed may be used. Moreover, the aforementioned salt, sugar, monosodium glutamate, and specially prepared soy sauce constitute the first seasoning.

Here, in place of the specially prepared soy sauce, koikuchi (dark) soy sauce sold on the market may be used. However, it is preferable to use the special soy sauce (generally called as "kakushi shoyu" (taste-enriching soy sauce)) prepared by the below-described method. That is, 2 liters of dark soy sauce sold on the market is diluted with 3 liters of water, and 150 g of sliced ginger, 12 to 18 cloves (100 to 300g) of crashed garlic, 5 tablespoonfuls of monosodium glutamate as an example of flavorings, and 1 kg of fine white sugar are added and mixed therein. These ingredients are then cooked over a low heat, simmered (cooked) for about 4 to 20 minutes after boiling starts. Next, heat is turned off and after the heated liquid cools near to a room temperature, mirin (sweet sake) and liquor (Japanese sake) each in an amount of 180 cc are added and stirred. By adding this special soy sauce to the batter, a lightly seasoned batter can be obtained. Moreover, since the batter contains baking powder and yam, it swells by heating, thus the volume is increased.

### Second Step

5 to 15 g (about 10 g is more preferable) of sliced beef (using abdominal meat is still preferable) as an example of livestock meat is prepared. The size of the beef is approximately 3 cm by 3 cm, however, not limited to this size. The beef is impregnated with a second seasoning having a soy sauce flavor and a strong taste. Method of preparing the second seasoning and its ingredients are described hereunder.

1.4 kg of fine white sugar and 5 tablespoonfuls (about 75 g) of monosodium glutamate as an example of flavorings are added to 2 liters of dark soy sauce in a container, and then mixed and heated until the sugar completely dissolves. Next, after the solution (mixed liquid) cools, 360 cc of sweet sake and 360 cc of liquor (Japanese sake) are added and stirred in the solution to obtain basic sauce. Only an amount of the basic sauce used for one week is put in another container, and to this, middle-sized cayenne pepper and grated garlic (ground garlic) are added. Each amount of the cayenne pepper, which is either raw and chopped or dried and ground, and the grated garlic (ground garlic) is about 2 to 6 tablespoonfuls (about 20 to 60 g) to 1200 cc of the basic sauce. By stirring these, the second seasoning is obtained. In addition, because the cayenne pepper and garlic added to the basic sauce are not heated, tastes and flavors of cayenne pepper and garlic are enhanced as a result.

To the second seasoning, if necessary, sesame oil, parched sesame (roasted sesame), black pepper each in a small amount (about 5 to 20 g of each) are added at the time of use to give flavor of sesame and taste of black pepper, then prepared beef is rubbed sufficiently in the second seasoning to impregnate the beef with the second seasoning. Next, as general way of cooking roasted beef, the beef sufficiently impregnated with the second seasoning is roasted (cooked) on a grill or in an oven. Thereby, roasted meat pieces are obtained.

### Third Step

Next, a mold whereon a plurality of hemispheric cavities which are between 34 and 60 mm in diameter are arranged (generally called as "takoyaki cooker") is heated on a fire (cooking stove etc.). Heating temperature is preferably around 180 °C. To the inside of the cavities of the heated mold, edible oil (lard, salad oil) is properly applied to prevent burning dry. Then, the batter prepared in the first step is poured into each cavity. Subsequently, a roasted meat piece prepared in the second step is added on the top, and then "tenkasu" (tempura coating crumbs) and chopped green onion are spread evenly further on the top.

Adding the roasted beef, green onion and tenkasu should be carried out before the batter is cooked (that is, before gelatinization of starch). Moreover, here, together with tenkasu and green onion or as their substitutes, dried fish, dried shrimp, vegetables, nori (laver), aonori (green laver), benishoga (red pickled ginger), and katsuobushi (dried bonito) etc. which are in a form of powder, granule, or flake can be added.

### Forth Step

After this, the batter disposed in the cavities of the mold is turned entirely inside the cavities while being heated to be ball-shaped pieces with use of a needle-like cooking utensil (pick) having a sharp tip. Thereby, ball-shaped products are obtained. In this case, since swelling agent is incorporated in the batter, the batter swells by heating and the total volume increases, thereby forming into a ball shape smoothly.

### Fifth Step

The resultant ball-shaped products are seasoned by spraying or applying a third seasoning having a soy sauce flavor and a light taste. As the third seasoning in this case, the special soy sauce (taste-enriching soy sauce) used in the first step is preferably used. The process for preparing the special soy sauce is omitted since it is already described before. In addition, soy sauce sold on the market (which may be dark, light, or sweet soy sauce) may be used for the final seasoning. Since the third seasoning is liquid, it can be applied or sprayed on the surface of the ball-shaped products with a brush or a sprayer. Furthermore, it is optional to sprinkle green laver, laver powder, fish flour, dried bonito flakes etc. or add mayonnaise etc. on the surface of the finished products to taste.

The ball-shaped food thus obtained can be eaten as conventional takoyaki. First, the third seasoning having a light taste applied on the surface and the lightly seasoned batter can be enjoyed, and by eating inside of the ball-shaped food, the roasted meat piece which is impregnated with the strong sauce and then roasted can be enjoyed. As a result, different tastes can be enjoyed.

Although, the respective ingredients of the ball-shaped food are limited in the above embodiment, the ball-shaped food can be produced by varying the component ratios of the respective ingredients used as described in the disclosure of invention.

In addition, abdominal meat of cattle is used as the livestock meat in the above embodiment, other parts of cattle can be used, and moreover, other mammals or edible reptiles such as alligator can be applied to the present invention.

### INDUSTRIAL APPLICABILITY

By the process for producing ball-shaped food according to the present invention, as it is clear from the above description, a precooked roasted meat piece is included in a lightly seasoned batter mainly made of wheat flour. Accordingly, different tastes can be enjoyed other than the taste of the seasoned batter itself at the time of eating.

Moreover, the ball-shaped food is in a convenient size of 34 to 60 mm in diameter, and provides a novel taste at the time of eating substituting the conventional takoyaki because of the roasted meat contained inside.

In addition, the weight of the roasted meat piece is between 5 to 15 g, which is convenient weight to eat in one mouthful. Thereby, the ball-shaped food can be eaten without trouble such as specially dividing etc.

Especially in the process for producing ball-shaped food according to the present invention, ingredients mainly containing tenkasu and chopped green onion can be included in the rounded batter by spreading them over the batter after placing a roasted meat piece in the third step.

Further, by adjusting the amount of gluten contained in the wheat flour in a range between 8.5 and 16 % by weight, it is possible to give the batter a right consistency and agreeable resistance to the teeth.

Moreover, by using an appropriate amount of salt, sugar, flavorings and soy sauce for the first seasoning, it is possible to season the batter lightly and appropriately. Further, by adding ground yam and eggs to the additives, it is possible to make the resultant ball-shaped food soft.

Also, beef can used as the livestock meat, and the second seasoning can be prepared by heating a mixture mainly containing soy sauce, sugar (in an amount of 50 to 80 % by weight to the soy sauce by the external division), and flavorings (in an amount of 2 to 5 % by weight to the soy sauce) until the sugar mixed in the mixture completely dissolves, adding sweet sake and sake (both in an amount of 15 to 25 % by weight to the soy sauce) to the mixture after the mixture cools to obtain basic sauce, stirring dried and powdered cayenne pepper (20 to 60 g) and ground raw garlic (50 to 100 g) in 1.2 liters of the basic sauce, and further adding sesame oil, roasted sesame, and black pepper (each in a small amount) at the time of use. Accordingly, the roasted meat piece which is seasoned and can be eaten alone can be contained inside. In the second seasoning, when the cayenne pepper and raw garlic are mixed without being cooked, the flavors and tastes of the ingredients can be kept as they are. In addition, if the roasted meat piece has been cooked beforehand, when cooking of the batter (namely, gelatinization of starch) is completed, the whole product is cooked. Therefore, it becomes possible to produce the ball-shaped food by shortening the time for cooking on the mold.

Furthermore, the third seasoning can be prepared by mixing water (3 to 4 liters), sliced ginger (100 to 300 g), crashed garlic (100 to 300 g) , flavorings (60 to 100 g) , and sugar (9.8 to 1.3 kg) into soy sauce (2 liters), and after heating, adding sweet sake (150 to 250 cc) and liquor (150 to 250 cc by the conversion into Japanese sake) . Accordingly, it is possible to produce the flavors of ginger and garlic unlike the ordinary soy sauce.

## Claims

1. A process for producing ball-shaped food comprising:
a first step of obtaining a lightly seasoned fluid batter by kneading a mixture of wheat flour containing gluten, a small amount of swelling agent, additives including a first seasoning for lightly seasoning a whole shell, and water in an amount 3 to 5 times as much as the wheat flour by weight;
a second step of obtaining roasted meat pieces by preparing sliced livestock meat in an amount of 5 to 15 g, impregnating the meat with a second seasoning having a soy sauce flavor and a strong taste, and then roasting the meat;
a third step of applying edible oil to inside of hemispheric cavities of 34 to 60 mm in diameter provided on a preheated mold, pouring the batter obtained in the first step on top thereof, and putting the roasted meat pieces obtained in the second step further on top thereof;
a fourth step of making spherical products by turning the whole of the batter disposed in the cavities of the mold while heating; and
a fifth step of seasoning the resultant spherical products by spraying or applying a third seasoning having a soy sauce flavor and a light taste.

2. The process for producing ball-shaped food according to claim 1, wherein ingredients mainly containing deep-fried tempura batter crumbs and chopped green onion are evenly spread over the batter after putting the roasted meat pieces in the third step.

3. The process for producing ball-shaped food according to claim 1 or 2, wherein the wheat flour is adjusted to contain gluten in an amount of 8.5 to 16 % by weight to be of a right consistency.

4. The process for producing ball-shaped food according to one of claims 1 to 3, wherein the first seasoning mainly contains salt, sugar, flavorings and soy sauce, the additives further containing ground yam and eggs, a combination ratio of the additives being following to the wheat flour used by external division: the salt being in an amount of 0.2 to 1.5 % by weight, the sugar being in an amount of 0.5 to 2 % by weight, the flavorings being in an amount of 1 to 3 % by weight, the soy sauce being in an amount of 2 to 5 % by weight, the ground yam being in an amount of 10 to 20 % by weight, the eggs being 3 to 7 pieces to 1 kg of the wheat flour.

5. The process for producing ball-shaped food according to one of claims 1 to 4, wherein the livestock meat is beef, and the second seasoning is prepared by heating a mixture mainly containing soy sauce, sugar, and flavorings until the sugar mixed in the mixture completely dissolves, adding sweet sake and liquor after the mixture cools to obtain basic sauce, subsequently adding dried and powdered cayenne pepper and ground raw garlic then stirring, and further adding small amounts of sesame oil, roasted sesame and black pepper upon using, the sugar being in an amount of 50 to 80 % by weight to the soy sauce by external division, the flavorings being in an amount of 2 to 5 % by weight to the soy sauce, the sweet sake and the liquor being in an amount of 15 to 25 % by weight respectively to the soy sauce, the cayenne pepper and raw garlic being in an amount of 20 to 60 g and 50 to 100 g respectively to 1.2 liters of the basic sauce.

6. The process for producing ball-shaped food according to one of claims 1 to 5, wherein the third seasoning is made by adding sweet sake in an amount of 150 to 250 cc and liquor in an amount of 150 to 250 cc by conversion into Japanese sake to a heated mixture of water in an amount of 3 to 4 liter, sliced ginger in an amount of 100 to 300 g, ground raw garlic in an amount of 100 to 300 g, flavorings in an amount of 60 to 100 g, and sugar in an amount of 0.8 to 1.3 kg to soy sauce in an amount of 2 liters.
